# EUROPEAN PATENT APPLICATION

(11) **EP 1 302 746 A1**
(43) Date of publication of application: **16.04.2003**
(21) Application number: 01124582.6
(22) Date of filing: 15.10.2001
(51) Int. Cl.: G01C 21/26, B60H 1/00, B60Q 1/14, B60J 7/057

(54) **System and method for controlling a comfort system of a vehicle**

(71) Applicant: Ford Global Technologies, Inc., Dearborn, Michigan 48126 (US)
(72) Inventor: Andersson, Hans, 431 47 Mölndal (SE); Apelryd, Martin, 417 20 Göteborg (SE)
(74) Representative: Lindberg, Klas Valter Bo

(57) **Abstract**

A system for controlling a comfort system (1) of a vehicle is disclosed. The system comprises a computing device (4) and is connected with a position input connection (5), for receiving vehicle position information from a positioning system (11). The system comprises a map database (2) for extracting map information relating to environmental conditions for at least one of a current and an upcoming road section, based on said vehicle position information. The system has an output connection for activating, based on information from said input connection (5) and said map database (2), at least one function of said comfort system. A method for controlling a comfort system (1) of a vehicle and a vehicle (20) comprising a comfort system (1) is also disclosed.

## Description

### Technical field of the Invention

The invention relates to a system for controlling a comfort system of a vehicle, said system being connected with a position input connection, for receiving vehicle position information from a positioning system. The invention also relates to a method for controlling a comfort system.

### Background art

Within the vehicle industry, many systems are currently being developed for safety adaptation and warning. In WO 00/05091 there is presented a sensor system for cruise control, in which system a position detector, provides position data to a country identification means and a national rules data base in order to modify vehicle systems according to national laws. This prior-art system uses the information from the sensors and the position detector together with information on national rules in order to modify the behavior of a cruise control system of a vehicle. However, there are other issues related to safety adaptation and warning in a system of a vehicle, such as a comfort system.

When driving into tunnels and other dark road sections, position light or even head light is required to signal the vehicle position to other traffic or enlighten/illuminate a road scene. It is of course undesirable that the driver of a vehicle is being reminded of insufficient enlightening/illumination after experiencing the hazard of driving in darkness. In addition, the driver may be fined for driving with lights turned off.

Furthermore, when approaching a tunnel or other road sections where the air quality is questionable, it is recommendable to turn on air re-circulation in the vehicle compartment. This is easily forgotten by the driver, leading to unpleasant air quality in the vehicle.

There are existing prior art systems for deriving measures for autonomous control of the vehicle or/and an indication or warning to the driver. Such prior art systems typically comprise sensors for detecting the presence of insufficient enlightening or questionable air quality.

Electronic noses are used as sensors to detect bad air quality of inlet air. Such electronic noses usually have a threshold time before bad air quality is recognized. During the threshold time the quality of the air in the vehicle compartment is already decreased. When the re-circulation in such prior-art system is activated, especially if the re-circulation is to be continued for a longer period, it might result in that the air quality being re-circulated in the vehicle compartment becomes even worse compared to when outside air is circulated in the vehicle compartment.

In analogy with the above described drawback of air quality sensor threshold time there is a corresponding issue related to threshold time for light sensors.

There are also other issues related to the use of sensors. Sensor systems are sometimes considered sensitive to disturbance, especially sensors not overly costly. A robust and reliable sensor system demands long lasting sensors with high accuracy and therefore often high cost.

### Summary of the Invention

Consequently, the object of the present invention is to provide a method and a system and a vehicle comprising said system for controlling comfort of a vehicle, providing a flexible solution overcoming the above mentioned drawbacks with the prior-art systems.

According to the invention the above object is achieved by a system comprising a computing device for controlling a comfort system of a vehicle, said system being connected with a position input connection for receiving vehicle position information from a positioning system. The comfort system further comprises a map database for extracting map information related to environmental conditions for at least one of a current and an upcoming road section, based on said vehicle position information, and an output connection for activating, based on information from said input connection and said map database, at least one function of said comfort system.

The map database could provide road section data related to surrounding environmental conditions relevant for the operation of the comfort system without being dependent on additional detection sensor input information. More preferably but not exclusively, extracted data from the map database is related to air quality or light conditions of a road section. The extracted data is primarily related to sections of rather well defined environmental conditions (not likely to change) such as in a tunnel, a road section in an industrial zone with questionable air quality etc.

Advantageously, the comfort system comprises a controlling function for performing an appropriate action of the comfort system, based on extracted data related to the environmental conditions. This action is preferably conducted in an autonomous manner.

Preferably, the output connection of the comfort system provides an alerting signal, said signal indicating said extracted environmental condition (A). The alerting signal may then be presented on a display for the driver of the vehicle within convenient time for the driver to take measures in due time depending on the situation.

According to a preferred embodiment of the comfort system the output connection of the comfort system provides an alerting signal, said signal indicating an activated function (B) of the comfort system.

According to an alternative embodiment of said comfort system said extracted data from the map database is related to a physical zone, in which zone the vehicle is currently being operated. By taking data from a physical zone into consideration it can be assured that the activated function of the comfort system is in accordance with rules and regulations of the present physical zone. Furthermore, it is possible to add data related to date and time in the map database, thus ensuring that lights are controlled in accordance with regulations and prevailing conditions within the said physical zone.

According to an embodiment of the invention, the map database is provided on-board the vehicle. This is advantageous since the time for retrieving road section information is shorted as compared to an outer map database, thus contributing to minimize the response time of the entire system. Further, the on-board location ensures continuous contact with the object system and thus a stable performance.

The above mentioned object is also achieved by a method for controlling a comfort system, comprising a computing device, being connected with a position input connection, for receiving vehicle position information from a positioning system, a map database, and an output connection, said method comprising the following steps:
- receiving vehicle position information via said position input connection,
- extracting, from said map database, map information relating to at least one of a current and an upcoming road section, based on said vehicle position information,
- extracting, from said map database, information related to environmental conditions for at least one of said road sections,
- activating via said output connection, based on information from said input connection and said map database, at least one function of said comfort system.

Advantageously, at least one function of said comfort system comprises the step of:
- controlling a function of said comfort system in order to perform an appropriate action based on extracted data related to the environmental conditions.

Preferably, the step of activating at least one function of said comfort system comprises the step of:
- providing an alerting signal, said signal indicating said extracted environmental condition (A).

According to a preferred method the step of activating at least one function of said comfort system comprises the step of:
- providing an alerting signal, said signal indicating an activated function (B) of the comfort system.

According to one embodiment of the invention, it further includes the step of activating at least one function of said comfort system comprising the step of:
- extracting data, from the map database, related to a physical zone, in which zone the vehicle is currently operated. In some zones, regions or countries, traffic regulations demands that the position lights or headlights are switched on, for example, between certain hours, always or by other criteria.

### Brief description of the Drawings

A currently preferred embodiment of the present invention will now be described in closer detail, with reference to the accompanying drawings.

Fig 1 is a block diagram of one preferred embodiment of the invention.

Fig 2 is a further block diagram disclosing certain preferred additional functions of the block diagram in accordance with an alternative embodiment of the invention.

Fig 3 is a further block diagram disclosing certain preferred additional functions of the block diagram in accordance with fig 2.

Fig 4 is perspective view with an installed comfort control system.

### Detailed description of preferred embodiments of the Invention

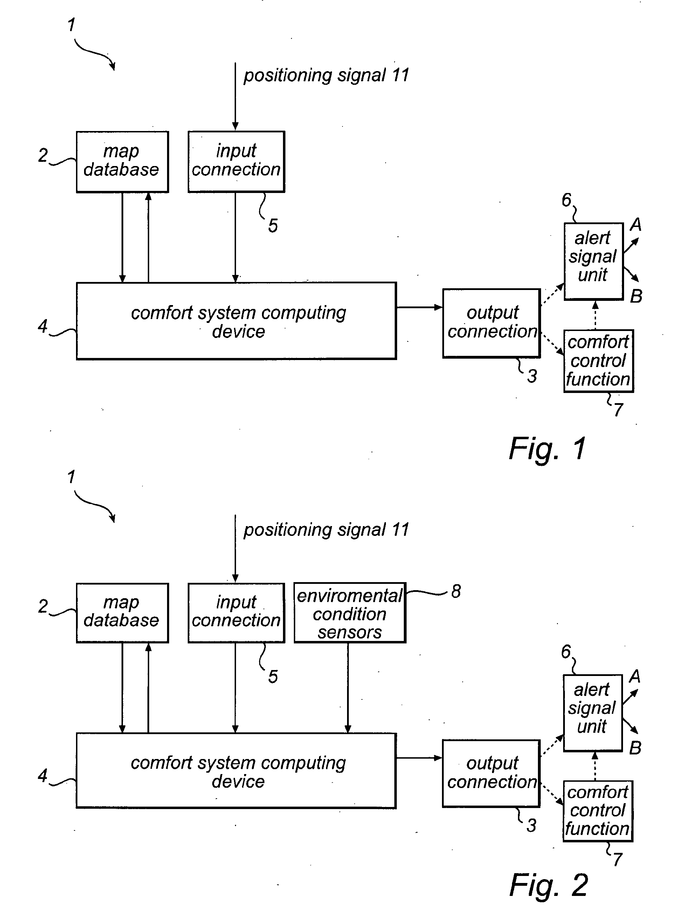

A system in accordance with a first embodiment of the invention is shown in fig 1. The system comprises a comfort control system 1, including a computing device 4. Furthermore, a map database 2 and an input connection 5 for receiving a positioning signal 11 such as a GPS signal, are connected with said comfort control system 1. Information from the map database 2 and the positioning signal 11 are arranged to be inputted to said computing device 4.

When a user drives the vehicle over a road section a geographical positioning signal 11, such as a GAS signal, locating the vehicle, is picked up and inputted through the input connection 5 to the computing device 4. Thereafter map data from said map database 2, relating to the current and/or an up-coming road section, based on said positioning signal 11, is loaded into the comfort system computing device 4. Furthermore, information is downloaded from said driver information database 4, said information being related to the current and/or an up-coming road section, based on said positioning signal 11. Consequently, positioning information and map information are loaded into said computing device 2. The computing device 4 will generate a signal comprising information to the output connection 3.

The information is transmitted to the output connection 3 and the signal is thereafter transmitted to the comfort control function 7 for autonomous comfort adaptation and/or the alert signal unit 6, for notifying appropriate comfort alterations (B) to the driver of the vehicle. The alert signal unit 6 may also have a feature for notifying prevailing environmental conditions (A) to the driver of the vehicle. The alert signal could for example be presented on a display, as a sound etc.

As described above, the system may be set in two different modes, an autonomous comfort adaptation mode, in which the comfort functions of the vehicle are automatically controlled, and a driver information mode, in which the driver is informed by an alert signal 6 of suitable comfort function adaptations.

According to an alternative embodiment of the invention which is presented in fig 2, the comfort control system is provided with environmental condition detection sensors 8. The sensors 8 are preferably used together with the map database 2, making it possible for the map database 2 to collect further data, which is not originally in the map database 2, on environmental conditions in different locations. The sensors 8 could also be used as a back-up for detecting dark sections or road sections with questionable air quality when data in the map data base is insufficient. A further purpose with the sensors 8 is to use them as security back-up for example if the map database connection is temporarily disconnected.

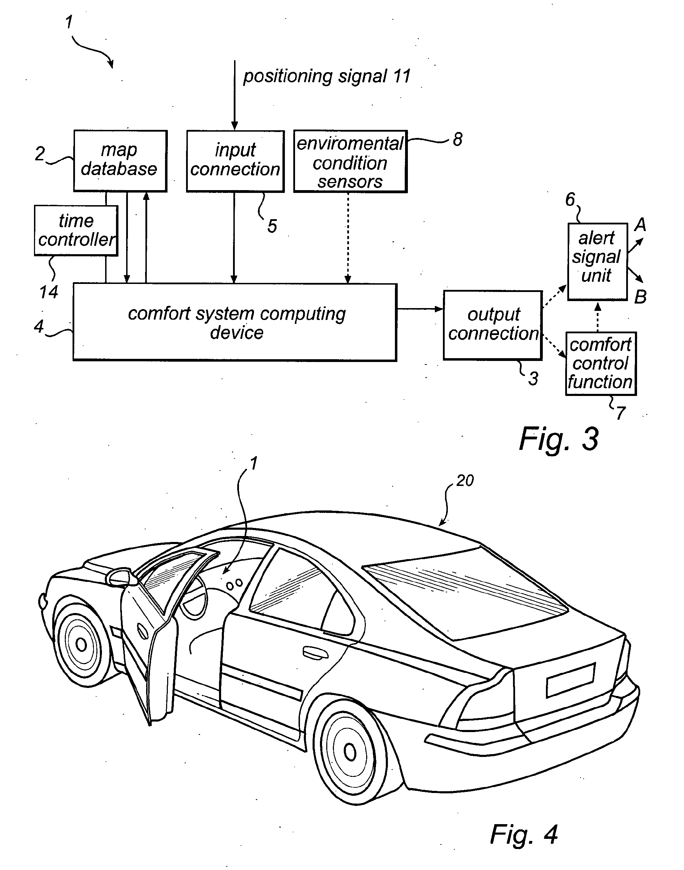

Also, a time controller 14 may be connected with said map database 2, as shown in fig 3. Thereby, it is possible to further adjust the comfort control system, based also on the position of the vehicle, by considering factors such as degraded night vision, or time controlled lights-on zones etc. on the road ahead.

The map database could be arranged on a distance from the vehicle and hence using wireless connection to transmit the data to said vehicle. The map database is then advantageously used as a central map database by a plurality of comfort control systems. Preferably, the map database is provided on-board the vehicle. The on-board location ensures continuous contact with the comfort control system and thus a stable performance.

### EXAMPLES

In the following a few non-limiting examples of situations where the invention may be used will be described.

When during driving the vehicle enters a possibly dark road section or zone the comfort system recognizes the section and triggers a function of turning lights on or an indication to the driver to turn on position-and/or head light and instrument light. The activation of these measures are done in suitable advance so that the vehicle is visible for drivers of meeting vehicles about to leave the dark road section or zone, which drivers otherwise may be too blended by the background light. The driver entering a dark road section or zone will need lights on before entering to enlighten the road scene ahead. This is especially important if the driver's eyes are accustomed to daylight. On a suitable distance after leaving the dark zone or road section, the light may be switched off autonomously or an indication may be addressed to the driver that light may not be needed.

In some zones, regions or countries, traffic regulations demands position light or headlight to be switched on always or between certain hours. Suitable measures are indicated to the driver or autonomously performed when the vehicle is started or when a time- or physical zone is passed.

When approaching a tunnel or other road section where the quality of air is questionable, it is recommendable to turn on re-circulation of the air in the vehicle compartment. This is often forgotten by the driver, leading to unpleasant air quality in the vehicle. To prevent this situation re-circulation of cab air is autonomously turned on or recommended to the driver when approaching a tunnel or other road section or zone where there is a risk of bad air quality. The re-circulation is active through the area and a bit longer to avoid bad air quality in the compartment. However, if the travel in a "bad air zone" is predicted to go on over a certain time, there is a risk of compartment air becoming worse than the outside air. The system will then indicate this to the driver and autonomously perform or suggest fast compartment air exchange when the vehicle passes ventilation areas at fresh air inlets in for example a long tunnel.

In the present application environmental condition is related to the air quality, taking into account information regarding primarily bad smell, pollution etc., and intensity of light in tunnels, dark sections and lights-on sections.

Comfort control relates to control of functions of the vehicle such as turning lights on/off, instruments on/off and re-circulation on/off.

The present invention should not be considered as being limited to the above-described embodiment, but rather includes all possible variations covered by the scope defined by the appended claims.

For example, many different combinations of the above-described features are possible, since most of them, such as the use of a time controller 14 and the inclusion of sensor information, are independent from each other. Furthermore, it is possible to regularly update the on-board map database 2, by means of a GSM connection or other means of information transfer.

## Claims

1. A system for controlling a comfort system (1) of a vehicle, said system being connected with a position input connection (5), for receiving vehicle position information from a positioning system (11),
**characterised in** the system comprising, a computing device (4), a map database (2) for extracting map information relating to environmental conditions for at least one of a current and an upcoming road section, based on said vehicle position information, and an output connection (3) for activating, based on said extracted map information, at least one function of said comfort system (1).

2. A system according to claim 1, wherein said comfort system (1) comprises a controlling function (7) for performing an appropriate action of the comfort system (1), based on said extracted map information related to the environmental conditions.

3. A system according to any one of claims 1-2, wherein said output connection of the comfort system (1) provides an alerting signal (6), said signal indicating said environmental conditions (A).

4. A system according to any one of claims 1-3, wherein said output connection of the comfort system provides an alerting signal (6), said signal indicating an activated function (B) of the comfort system.

5. A system according to any one of claims 1-4, wherein said extracted map information is related to a physical zone in which zone the vehicle is currently being operated.

6. A system according to any one of claims 1-5, wherein said extracted map information is related to air quality of a road section.

7. A system according to any one of claims 1-6, wherein said extracted map information is related to light conditions of a road section.

8. A system according to any one of claims 6-7, wherein said road section is located within a tunnel.

9. A system according to any one of claims 1-8, wherein said map database (2) is provided on-board the vehicle.

10. A vehicle (20), comprising a comfort system (1) according to any of the preceding claims.

11. A method for controlling a vehicle, said vehicle having a comfort system (1), comprising a computing device (4), and being connected with a position input connection (5), for receiving vehicle position information from a positioning system (11), a map database (2), and an output connection (3), said-method comprising the following steps:
- receiving vehicle position information via said position input connection (5),
- extracting, from said map database (2), map information relating to at least one of a current and an upcoming roads section, based on said vehicle position information,
- extracting, from said map database (2), information related to environmental conditions for at least one of said road sections,
- activating via said output connection (3), based on said information related to environmental conditions for at least one of said road sections, at least one function of said comfort system.

12. A method according to claim 11, wherein the step of activating at least one function of said comfort system (1) comprises the step of:
- controlling a function (7) of said comfort system (1) in order to perform an appropriate action based on said information related to environmental conditions.

13. A method according to any one of claims 11-12, wherein the step of activating at least one function of said comfort system comprises the step of:
- providing an alerting signal (6), said signal indicating a said environmental condition (A).

14. A method according to any one of claims 11-13, wherein the step of activating at least one function of said comfort system comprises the step of:
- providing an alerting signal (6), said signal indicating an activated function (B) of the comfort system (1).

15. A method according to any one of claims 11-14, wherein the step of activating at least one function (7) of said comfort system comprises the step of:
- extracting map information related to a physical zone, in which zone the vehicle is currently being operated.

16. A method according to any one of claims 11-15, wherein said extracted map information is related to air quality of a road section.

17. A method according to any one of claims 11-16, wherein said extracted map information is related to light conditions of a road section.

18. A method according to any one of claims 16-17, wherein said road section is located within a tunnel.

19. A method according to any one of claims 11-18, wherein said map database (2) is provided on-board the vehicle.
